# EUROPÄISCHE PATENTSCHRIFT

(11) **EP 0 776 780 B1**
(45) Veröffentlichungstag und Bekanntmachung des Hinweises auf die Patenterteilung: **14.04.1999**
(21) Anmeldenummer: 96890169.4
(22) Anmeldetag: 29.10.1996
(51) Int. Cl.: B60M 1/28

(54) **Maschine zum Verlegen einer Oberleitung eines Gleises**
Machine for installing a track overhead line
Machine pour la pose d'un caténaire de voie

(30) Priorität: 01.12.1995 AT 1968/95
(43) Veröffentlichungstag der Anmeldung: 04.06.1997
(73) Patentinhaber: Franz Plasser Bahnbaumaschinen- Industriegesellschaft m.b.H., 1010 Wien (AT)
(72) Erfinder: Theurer, Josef, 1010 Wien (AT); Gruber, Leopold Rudolf, 3270 Scheibbs (AT)

(56) Entgegenhaltungen:
- EP-A- 0 459 537

## Beschreibung

Die Erfindung betrifft eine Maschine zum Verlegen eines Fahrdrahtes und/ oder eines Tragseiles einer Oberleitung eines Gleises, mit einem auf Schienenfahrwerken abgestützten, eine aufgewickelten Fahrdraht bzw. Tragseil beinhaltende Drahttrommel aufweisenden Maschinenrahmen und einer eine Führungsrolle zur Führung des von der Drahttrommel abgewickelten Fahrdrahtes bzw. Tragseiles sowie einen Höhenverstellantrieb aufweisenden Führungseinrichtung.

Gemäß EP-B1-0 416 136 und EP-B1-0 459 537 ist eine derartige Maschine bekannt, mit der ein Fahrdraht und ein Tragseil einer Gleisoberleitung gemeinsam und mit der endgültigen Zugspannung verlegt werden können. Fahrdraht und Tragseil werden dabei kontinuierlich jeweils von einer auf dem Maschinenrahmen gelagerten Drahttrommel abgezogen und durchlaufen eine Zugspannungsvorrichtung, bevor sie anhand einer Führungseinrichtung in der korrekten Höhen- und Seitenlage für die Endmontage positioniert werden. Die Führungseinrichtung besteht aus einem höhenverstellbaren Auslegerkran, der um eine vertikale Achse rotierbar auf dem Maschinenrahmen aufgestellt ist und an dessen freiem Ende die beiden Führungsrollen zur Führung des Fahrdrahtes bzw. Tragseiles angeordnet sind. Die gabelartige Halterung jeder Führungsrolle ist mit dem Tragarm beweglich verbunden, um eine individuelle Verdrehung der Führungsrolle um eine annähernd in Gleislängsrichtung verlaufende Achse im Zuge der - für den Zick-Zack-Verlauf der Oberleitung erforderlichen - seitlichen Verschwenkung des Kranes zu ermöglichen.

Eine weitere, durch die DE-C3-22 11 247 geoffenbarte Maschine zum Installieren einer Oberleitung weist eine auf einem gleisverfahrbaren Maschinenrahmen montierte Hebebühne auf, auf der sich eine Zugspannungsvorrichtung sowie eine Führungseinrichtung befinden. Diese besteht aus einem höhenverstellbaren und um eine vertikale Achse seitenverschwenkbaren Hubarm mit daran befestigten Führungsrollen für den Fahrdraht und das Tragseil, welche von auf dem Maschinenrahmen gelagerten Drahttrommeln abgewickelt werden.

Eine andere, gemäß AT-B-398 737 bekannte Maschine ist mit zwei Drahttrommeln für Tragseil und Fahrdraht ausgestattet, denen jeweils eine eigene, unabhängige Führungseinrichtung zugeordnet ist. Letztere haben die Form von höhenverstellbaren Auslegerarmen, die seitenverschwenkbar auf dem Maschinenrahmen montiert sind und am freien Ende jeweils eine Vorrichtung zum Führen und Festklemmen des Drahtes aufweisen.

Die DE-A-20 12 248 beschreibt eine Maschine für die Oberleitungsmontage mit einer Führungseinrichtung, die je eine Führungsrolle für Fahrdraht und Tragseil beinhaltet. Diese Führungsrollen sind anhand einer auf dem Maschinenrahmen angeordneten, teleskopartigen Vorrichtung sowohl in vertikaler als auch in horizontaler Richtung verstellbar ausgebildet.

Schließlich ist es - beispielsweise aus der US 4,213,596 oder DE-B-526 889 - bekannt, die Drahttrommeln für Tragseil und/oder Fahrdraht und die höhenund seitenverstellbare(n) Führungseinrichtung(en) auf separaten, im Arbeitseinsatz zu einem Zugsverband gekuppelten Schienenfahrzeugen vorzusehen.

Die Aufgabe der Erfindung besteht nun in der Schaffung einer Maschine der eingangs beschriebenen Art, die bei reduziertem konstruktivem Aufwand und einfacher Handhabung uneingeschränkt zur Oberleitungsmontage einsetzbar ist.

Diese Aufgabe wird mit einer gattungsgemäßen Maschine dadurch gelöst, daß die Führungseinrichtung um eine in Maschinenlängsrichtung und horizontal verlaufende Schwenkachse verschwenkbar gelagert und mit einem Verschwenkantrieb zur Verschwenkung der Führungseinrichtung mitsamt dem Höhenverstellantrieb um die genannte Schwenkachse verbunden ist.

Eine derartige Ausbildung der Führungseinrichtung bietet die Möglichkeit, den zu verlegenden Fahrdraht unter Zuhilfenahme vereinfachter konstruktiver Mittel der Höhe und Seite nach genauestens zu positionieren. Die Rotation um die horizontale Schwenkachse bewirkt eine Querverstellung der Führungsrolle bezüglich des Gleises, wodurch sich das Zick-Zack-Muster des verlegten Fahrdrahtes in Zusammenhang mit der Höhenverstellung der Führungsrolle völlig problemlos erzielen läßt. Der konstruktiv simple Aufbau gewährleistet in Verbindung mit langer Lebensdauer und geringem Verschleiß außerdem, daß die Steuerung der Antriebe unkompliziert und daher zuverlässig durchführbar ist. In Verbindung mit den Merkmalen gemäß Anspruch 2 und insbesondere Anspruch 3 ergibt sich der zusätzliche Vorteil, daß eine präzise und gleichbleibende Ausrichtung des Fahrdrahtes auf die Führungsrolle sichergestellt ist, wodurch ein seitliches Abrutschen des Drahtes von der Führungsrolle verläßlich vermieden werden kann.

Weitere erfindungsgemäße Vorteile ergeben sich aus den Unteransprüchen sowie aus der Beschreibung.

Die Erfindung wird im folgenden anhand der Zeichnungen näher beschrieben.

Es zeigen:
Fig. 1 und 2 eine Seitenansicht bzw. eine Draufsicht auf eine erfindungsgemäß ausgebildete Maschine zum Verlegen einer Oberleitung,
Fig. 3 eine vergrößerte Detailseitenansicht der Führungseinrichtung der Maschine und
Fig. 4 eine Ansicht in Maschinenlängsrichtung gemäß Pfeil IV in Fig. 3.

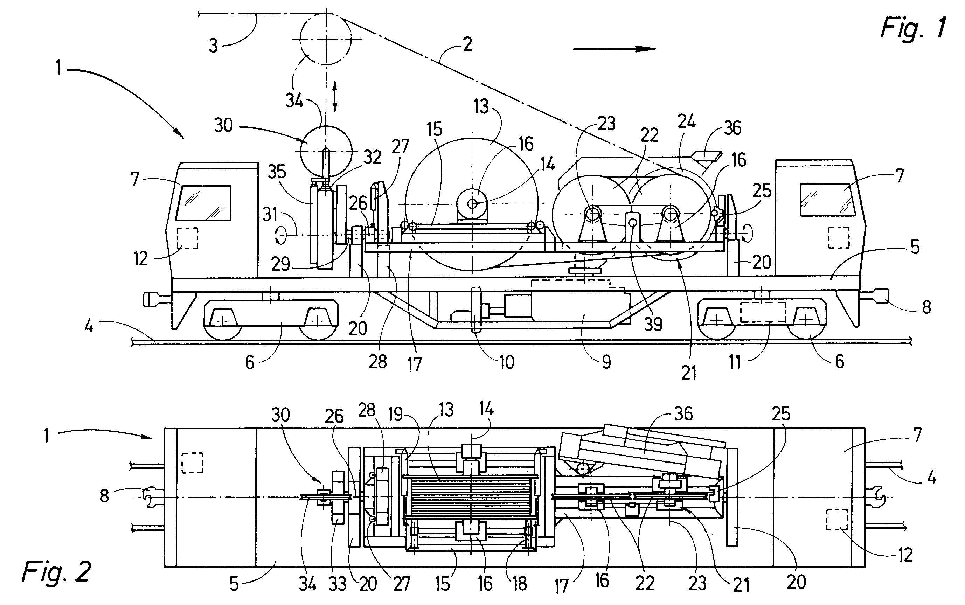

In Fig. 1 und 2 ist eine Maschine 1 zum Verlegen eines Fahrdrahtes 2 (bzw. gegebenenfalls eines Tragseiles) einer Oberleitung 3 eines Gleises 4 dargestellt. Die Maschine 1 weist einen Maschinenrahmen 5 auf, der über zwei Schienenfahrwerke 6 auf dem Gleis 4 abgestützt ist und an jedem Längsende eine Fahr- bzw. Arbeitskabine 7 und eine Kupplung 8 zur Eingliederung in einen Zugsverband aufweist. Ein Motor 9 und ein Hydraulikaggregat 10 sind für die Energieversorgung eines Fahrantriebes 11 der Maschine 1 und aller weiteren, noch zu beschreibenden Antriebe vorgesehen, die anhand von Steuereinrichtungen 12 fernbedienbar sind. Die Maschine ist weiters mit einem höhen- und seitenverschwenkbaren Kran 36 ausgestattet.

Der zu verlegende Fahrdraht 2 ist auf einer Drahttrommel 13 aufgewickelt, die mittels Lagerblöcken 16 um eine in Maschinenquerrichtung verlaufende, horizontale Rotationsachse 14 drehbar auf einem Schlitten 15 montiert ist. Dieser ist seinerseits auf einem Trägerrahmen 17 gelagert und relativ zu diesem auf Gleitstangen 18 anhand von Verstellantrieben 19 in Maschinenquerrichtung verschiebbar. Neben der Drahttrommel 13 ist auf dem Trägerrahmen 17 eine Zugspannungsvorrichtung 21 vorgesehen, die aus zwei von der Drahttrommel 13 in Maschinenlängsrichtung distanzierten Umlenkrollen 22 gebildet ist. Diese - ebenfalls mittels Lagerblöcken 16 auf dem Trägerrahmen 17 befestigten - Umlenkrollen 22 sind um Achsen 23 rotierbar, die parallel zur Rotationsachse 14 verlaufen, wobei eine der Rollen mit einer Bremsscheibe 24 und einer auf diese wirkenden Bremsvorrichtung 25 ausgestattet ist. Zur Aufrechterhaltung einer konstanten Zugspannung sind die Umlenkrollen 22 durch einen Hydromotor 39 beaufschlagbar.

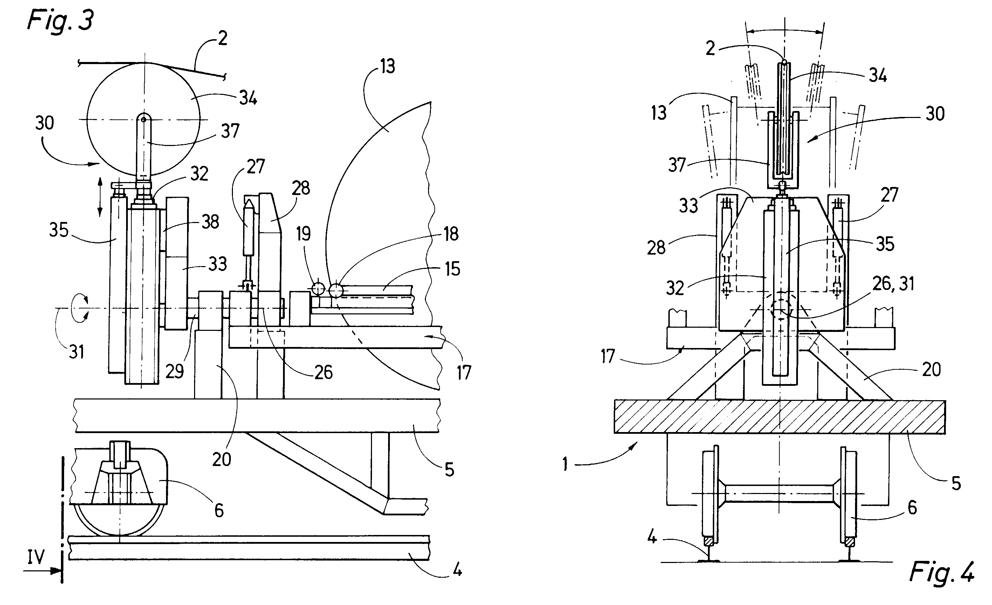

Wie im folgenden auch anhand der Fig. 3 und 4 deutlich wird, ist der Trägerrahmen 17 im Bereich zwischen den beiden Kabinen 7 mit dem Maschinenrahmen 5 über zwei Stützen 20 verbunden und auf diesen um eine in Maschinenlängsrichtung verlaufende, horizontale Achse 26 verschwenkbar gelagert. Am der Drahttrommel 13 benachbarten Ende des Trägerrahmens 17 wird diese Achse 26 durch eine Welle 29 gebildet, die auf der Stütze 20 und auf einer von dieser in Maschinenlängsrichtung distanzierten, ebenfalls auf dem Maschinenrahmen 5 montierten Konsole 28 gelagert ist und auf der der Trägerrahmen 17 - nach Art einer Wiege pendelnd - befestigt ist.

Die in Maschinenlängsrichtung verlaufende Welle 29 kragt auf der dem Trägerrahmen 17 gegenüberliegenden Seite der Stütze 20 über diese vor und dient zur Lagerung einer mit der Welle 29 drehfest verbundenen Führungseinrichtung 30. Dadurch ist die - außerhalb eines von den Stützen 20 begrenzten Längenabschnittes des Maschinenrahmens 5 angeordnete - Führungseinrichtung 30 um eine in Maschinenlängsrichtung und horizontal verlaufende Schwenkachse 31 verschwenkbar ausgebildet, die zur Achse 26 des Trägerrahmens 17 koaxial angeordnet ist. Zur Verschwenkung der Führungseinrichtung 30 gemeinsam mit dem anhand der Welle 29 mit dieser verbundenen Trägerrahmen 17 sind zwei Verschwenkantriebe 27 vorgesehen, die einerseits am Trägerrahmen 17 und andererseits an der Konsole 28 angelenkt sind.

Die Führungseinrichtung 30 ist aus einer Anzahl von koaxial ineinander gesteckten Teleskoprohren 32 gebildet, die etwa vertikal angeordnet sind. Das äußerste Teleskoprohr 32 ist in einem von der Schwenkachse 31 distanzierten, höhergelegenen Bereich 38 auf einer Halterung 33 befestigt, die fix mit der Welle 29 und somit mit dem Trägerrahmen 17 verbunden ist. Am oberen Ende des innersten Teleskoprohres 32 ist auf einer Gabel 37 eine Führungsrolle 34 angeordnet, die zur Führung des von der Drahttrommel 13 abgewickelten und durch die Zugspannungsvorrichtung 21 mit einer vorwählbaren Zugspannung beaufschlagten Fahrdrahtes 2 (bzw. gegebenenfalls Tragseiles) dient. Anhand eines gleichfalls teleskopisch ausfahrbaren Höhenverstellantriebes 35, der an der Gabel 37 angelenkt ist, sind die Teleskoprohre 32 der Höhe nach verschiebbar und damit die Führungsrolle 34 höhenverstellbar ausgebildet.

Im Arbeitseinsatz wird die Führungsrolle 34 der Führungseinrichtung 30 anhand des Höhenverstellantriebes 35 so weit vertikal verschoben, bis sich der in die Nut der Rolle eingelegte Fahrdraht 2 (bzw. gegebenenfalls das Tragseil) in der korrekten Höhe für die Endmontage befindet (s. strichpunktierte Linien in Fig. 1). Unter kontinuierlicher Vorfahrt der Maschine 1 wird nun der Fahrdraht 2 verlegt, der von der Zugspannungsvorrichtung 21 permanent unter der vorgewählten, endgültigen Verlegespannung gehalten wird. Zur Herstellung des erforderlichen Zick-Zack-Verlaufes, in dem der Fahrdraht 2 montiert werden muß, werden der Trägerrahmen 17 und die auf diesem gelagerte Führungseinrichtung 30 mitsamt dem Höhenverstellantrieb 35 mittels der Verschwenkantriebe 27 um die Schwenkachse 31 hin- und hergeschwenkt (siehe strichpunktiert angedeutete Stellung in Fig. 4 oben). Gleichzeitig und unabhängig davon wird der Schlitten 15 mit der Drahttrommel 13 auf dem Trägerrahmen 17 durch die Verstellantriebe 19 in Maschinenquerrichtung verstellt, um den von der Drahttrommel 13 abgezogenen Fahrdraht 2 in einer Linie mit der Zugspannungsvorrichtung 21 auszurichten bzw. zu halten. Das Auswechseln einer leeren Drahttrommel 13 gegen eine volle Trommel wird unter Zuhilfenahme des Kranes 36 durchgeführt.

Abgesehen von der in Fig. 1 gezeigten Möglichkeit der Führung des Fahrdrahtes 2 besteht auch die alternative Möglichkeit, den Fahrdraht von unten auf die Führungsrolle 34 zu bringen und in der entgegengesetzten Fahrtrichtung zu verlegen, wobei in vorteilhafter Weise die Maschine 1 nicht gewendet werden muß; es ist hierzu lediglich eine Beaufschlagung des Fahrantriebes 11 in der umgekehrten Richtung erforderlich.

Im Rahmen der Erfindung sind natürlich auch noch andere, hier nicht dargestellte Ausführungsformen der Maschine möglich. So kann z.B. die Führungseinrichtung 30 direkt auf dem Trägerrahmen 17 im Bereich zwischen den beiden Stützen 20 oder auch am Maschinenrahmen 5 befestigt sein.

Ebenso besteht auch die Möglichkeit, die Führungseinrichtung 30 mit zwei in vertikaler Richtung übereinander angeordneten Führungsrollen 34 auszustatten, so daß Fahrdraht 2 und Tragseil gleichzeitig verlegbar sind.

## Patentansprüche

1. Maschine zum Verlegen eines Fahrdrahtes (2) und/oder eines Tragseiles einer Oberleitung (3) eines Gleises (4), mit einem auf Schienenfahrwerken (6) abgestützten, eine aufgewickelten Fahrdraht (2) bzw. Tragseil beinhaltende Drahttrommel (13) aufweisenden Maschinenrahmen (5) und einer eine Führungsrolle (34) zur Führung des von der Drahttrommel (13) abgewickelten Fahrdrahtes (2) bzw. Tragseiles sowie einen Höhenverstellantrieb (35) aufweisenden Führungseinrichtung (30), dadurch gekennzeichnet, daß die Führungseinrichtung (30) um eine in Maschinenlängsrichtung und horizontal verlaufende Schwenkachse (31) verschwenkbar gelagert und mit einem Verschwenkantrieb (27) zur Verschwenkung der Führungseinrichtung (30) mitsamt dem Höhenverstellantrieb (35) um die genannte Schwenkachse (31) verbunden ist.

2. Maschine nach Anspruch 1, dadurch gekennzeichnet, daß die Drahttrommel (13) auf einem Trägerrahmen (17) gelagert ist, der um eine in Maschinenlängsrichtung und horizontal verlaufende Achse (26) verschwenkbar am Maschinenrahmen (5) gelagert und zur Verschwenkung mit dem Verschwenkantrieb (27) der Führungseinrichtung (30) verbunden ist.

3. Maschine nach Anspruch 1 oder 2, dadurch gekennzeichnet, daß die Führungseinrichtung (30) auf dem Trägerrahmen (17) gelagert ist.

4. Maschine nach einem der Ansprüche 1, 2 oder 3, dadurch gekennzeichnet, daß die Schwenkachse (31) der Führungseinrichtung (30) und die Achse (26) des Trägerrahmens (17) koaxial ausgebildet sind.

5. Maschine nach einem der Ansprüche 1 bis 4, dadurch gekennzeichnet, daß zur Abwicklung des Fahrdrahtes (2) bzw. Tragseiles auf die Führungsrolle (34) der Führungseinrichtung (30) eine aus zwei Umlenkrollen (22) gebildete Zugspannungsvorrichtung (21) zur Aufbringung einer vorwählbaren Zugspannung auf den Fahdraht (2) bzw. das Tragseil angeordnet und mit dem Trägerrahmen (17) verbunden ist.

6. Maschine nach einem der Ansprüche 1 bis 5, dadurch gekennzeichnet, daß die Führungseinrichtung (30) aus einer Anzahl von koaxial ineinandergesteckten und durch den Höhenverstellantrieb (35) höhenverschiebbaren Teleskoprohren (32) gebildet und die Führungsrolle (34) am oberen Ende des innersten Teleskoprohres (32) befestigt ist.

7. Maschine nach Anspruch 6, dadurch gekennzeichnet, daß ein äußerstes Teleskoprohr (32) der Führungseinrichtung (30) in einem von der Schwenkachse (31) distanzierten, höhergelegenen Bereich (38) mit dem Trägerrahmen (17) verbunden ist.

8. Maschine nach einem der Ansprüche 1 bis 7, dadurch gekennzeichnet, daß die Führungseinrichtung (30) außerhalb eines von den Trägerrahmen (17) abstützenden und mit dem Maschinenrahmen (5) verbundenen Stützen (20) begrenzten Längenabschnittes angeordnet ist.

## Claims

1. A machine for installing a contact wire (2) and/or a supporting cable of an overhead line (3) of a track (4), including a machine frame (5) supported on on-track undercarriages (6) and comprising a wire drum (13) containing rolled-up contact wire (2) or supporting cable, and a guiding device (30) comprising a guide roller (34) for guiding the contact wire (2) or supporting cable unwound from the wire drum (13) as well as a vertical adjustment drive (35), characterized in that the guiding device (30) is mounted so as to be pivotable about a pivot axis (31) extending in the longitudinal direction of the machine and horizontally and is connected to a pivot drive (27) for pivoting the guiding device (30), together with the vertical adjustment drive (35), about the said pivot axis (31).

2. A machine according to claim 1, characterized in that the wire drum (13) is mounted on a supporting frame (17) which is mounted on the machine frame (5) so as to be pivotable about an axis (26) extending in the longitudinal direction of the machine and horizontally, and which is connected, for the purpose of pivoting, to the pivot drive (27) of the guiding device (30).

3. A machine according to claim 1 or 2, characterized in that the guiding device (30) is mounted on the supporting frame (17).

4. A machine according to one of claims 1, 2 or 3, characterized in that the pivot axis (31) of the guiding device (30) and the axis (26) of the supporting frame (17) are designed coaxially.

5. A machine according to one of claims 1 to 4, characterized in that, for unwinding the contact wire (2) or supporting cable onto the guide roller (34) of the guiding device (30), a tensile stress device (21) formed by two deflection rollers (22) is arranged for applying a pre-selectable tensile stress to the contact wire (2) or the supporting cable and is connected to the supporting frame (17).

6. A machine according to one of claims 1 to 5, characterized in that the guiding device (30) is formed from a number of telescoping tubes (32) placed coaxially inside one another and being vertically displaceable by means of the vertical adjustment drive (35), and that the guide roller (34) is attached to the upper end of the innermost telescoping tube (32).

7. A machine according to claim 6, characterized in that an outermost telescoping tube (32) of the guiding device (30) is connected to the supporting frame (17) in a region (38) distanced from the pivot axis (31) and positioned higher.

8. A machine according to one of claims 1 to 7, characterized in that the guiding device (30) is arranged outside of a longitudinal portion delimited by supports (20) connected to the machine frame (5) and supporting the supporting frame (17).

## Revendications

1. Machine pour la pose d'un fil de contact (2) et/ou d'un câble porteur d'une caténaire (3) d'une voie ferrée (4), avec un châssis de machine (5) prenant appui sur des trains de roulement sur rails (6), présentant un tambour à câble (13) contenant le fil de contact (2) respectivement le câble porteur enroulé, et un dispositif de guidage (30) présentant un rouleau de guidage (34) pour le guidage du fil de contact (2) respectivement du câble porteur déroulé du tambour à câble (13) ainsi qu'une commande de réglage en hauteur (35), caractérisée en ce que le dispositif de guidage (30) est logé d'une manière pivotante autour d'un axe de pivotement (31) s'étendant dans la direction longitudinale de la machine et horizontalement et est relié à une commande de pivotement (27) pour faire pivoter le dispositif de guidage (30) conjointement avec la commande de réglage en hauteur (35) autour de l'axe de pivotement précité (31).

2. Machine selon la revendication 1 caractérisée en ce que le tambour à câble (13) est logé sur un châssis de support (17) qui est logé d'une manière pivotante au châssis de machine (5) autour d'un axe (26) s'étendant dans la direction longitudinale de la machine et horizontalement et qui, en vue du pivotement, est relié à la commande de pivotement (27) du dispositif de guidage (30).

3. Machine selon la revendication 1 ou 2, caractérisée en ce que le dispositif de guidage (30) est logé sur le châssis de support (17).

4. Machine selon l'une des revendications 1, 2 ou 3, caractérisée en ce que l'axe de pivotement (31) du dispositif de guidage (30) et l'axe (26) du châssis de support (17) sont réalisés d'une manière coaxiale.

5. Machine selon l'une des revendications 1 à 4, caractérisée en ce qu'il est disposé, pour le déroulement du fil de contact (2) respectivement du câble porteur, sur le rouleau de guidage (34) du dispositif de guidage (30), un dispositif de mise sous tension (21) constitué de deux galets de renvoi (22) pour appliquer une contrainte de traction pouvant être sélectionnée à l'avance sur le fil de contact (2) respectivement le câble porteur et est relié au châssis de support (17).

6. Machine selon l'une des revendications 1 à 5, caractérisée en ce que le dispositif de guidage (30) est constitué par un nombre de tubes télescopiques (32) pouvant être poussés coaxialement les uns dans les autres et déplaçables en hauteur par la commande de déplacement en hauteur (35) et que le rouleau de guidage (34) est fixé à l'extrémité supérieure du tube télescopique (32) le plus à l'intérieur.

7. Machine selon la revendication 6, caractérisée en ce qu'un tube télescopique le plus à l'extérieur (32) du dispositif de guidage (30) est relié dans une zone (38) espacée de l'axe de pivotement (31), située plus haut, au châssis de support (17).

8. Machine selon l'une des revendications 1 à 7, caractérisée en ce que le dispositif de guidage (30) est disposé à l'extérieur d'un tronçon longitudinal supportant le châssis de support (17) et délimité par des montants (20) reliés au châssis de machine (5).
